(19) Europäisches Patentamt
European Patent Office
Office européen des brevets

(11) **EP 3 904 651 B1**

(12) **FASCICULE DE BREVET EUROPEEN**

(45) Date de publication et mention de la délivrance du brevet:
**23.08.2023   Bulletin 2023/34**

(21) Numéro de dépôt: **21170596.7**

(22) Date de dépôt: **27.04.2021**

(51) Classification Internationale des Brevets (IPC):
**F01N 3/20** $^{(2006.01)}$        **F01N 9/00** $^{(2006.01)}$

(52) Classification Coopérative des Brevets (CPC):
**F01N 3/2006; F01N 9/00;** F01N 2900/0602;
F01N 2900/08; F01N 2900/10; F01N 2900/12;
F01N 2900/1602; F01N 2900/1626;
F01N 2900/1631; Y02A 50/20; Y02T 10/12;
Y02T 10/40

(54) **PROCÉDÉ DE GESTION DE L'AMORÇAGE D'UN DISPOSITIF DE POSTTRAITEMENT DES GAZ D'ÉCHAPPEMENT DE VÉHICULE AUTOMOBILE**

VERFAHREN ZUR STEUERUNG DER BETRIEBSTEMPERATUR EINER ABGASNACHBEHANDLUNGSVORRICHTUNG EINES KRAFTFAHRZEUGS

METHOD FOR MANAGING THE LIGHT-OFF OF A DEVICE FOR AFTER-TREATMENT OF THE EXHAUST GASES OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2020   FR 2004257**

(43) Date de publication de la demande:
**03.11.2021   Bulletin 2021/44**

(73) Titulaire: **Renault s.a.s**
**92100 Boulogne Billancourt (FR)**

(72) Inventeurs:
• **DELAYE, Xavier**
  **75014 PARIS (FR)**
• **LEFEVRE, Cédric**
  **91510 LARDY (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 2 923 050**        **FR-A1- 3 081 506**
**US-A1- 2017 211 493**      **US-A1- 2020 102 874**

EP 3 904 651 B1

**Description**

La présente invention concerne, de manière générale, le traitement des gaz d'échappement produits par un véhicule automobile en vue de la réduction d'émission de polluants.

Plus particulièrement, l'invention se rapporte à l'amorçage d'un dispositif de post-traitement des gaz d'échappement et, plus précisément encore, à un procédé de gestion d'un dispositif de post-traitement des gaz d'échappement.

Généralement, au moins un dispositif de traitement des gaz de combustion, dit catalyseur ou pot catalytique, est monté à l'échappement du moteur et traite les polluants contenus dans les gaz de combustion du moteur, tels que les hydrocarbures imbrûlés (HC), le monoxyde de carbone (CO), ou encore les oxydes d'azotes (NOx).

Dans le cas d'un moteur à essence, il peut s'agir, par exemple, d'un catalyseur trois voies qui traite les HC, les CO et les NOx. Dans le cas d'un moteur Diesel, il peut s'agir d'un catalyseur d'oxydation qui oxyde les HC et les CO, ou encore d'un catalyseur de réduction sélective des oxydes d'azote ou d'un piège à oxydes d'azote, qui réduisent les NOx.

L'efficacité du catalyseur est liée à sa température. Par efficacité, on entend le pourcentage des polluants entrants dans le catalyseur qui y est traité. Lorsque le catalyseur est froid, c'est-à-dire à une température inférieure à sa température d'amorçage, celui-ci n'est pas ou peu actif. En conséquence, le démarrage à froid et le fonctionnement lors des premières secondes du moteur engendrent un rejet important de polluants par le véhicule dans l'atmosphère extérieure, le catalyseur étant incapable de traiter les polluants contenus dans les gaz de combustion du moteur.

La phase de mise en action du catalyseur s'avère donc primordiale pour que la température d'amorçage soit rapidement atteinte par le catalyseur, de façon à réduire l'émission de polluants.

Classiquement, des moyens de chauffe du dispositif de post-traitement des gaz d'échappement sont actionnés.

Par exemple, il est connu d'actionner des éléments chauffants permettent d'augmenter directement la température du catalyseur. Les éléments chauffants puisent leur énergie dans des batteries électriques, elles-mêmes rechargées par le moteur.

Une autre solution consiste en l'utilisation d'accessoires électriques permettant d'augmenter indirectement la température du catalyseur en augmentant la puissance produite par le moteur.

Enfin, la mise en oeuvre de stratégies de fonctionnement du moteur, notamment liées à la combustion, contribuent également à l'apport de chaleur, et donc à la montée en température du dispositif de post-traitement des gaz d'échappement.

Pour des moteurs à essence, l'augmentation de température se fait généralement par un sous-calage de l'allumage par rapport au fonctionnement normal du moteur sur un même point de fonctionnement régime/charge, ou par l'augmentation du régime moteur quand celui-ci est au ralenti, ou encore par une répartition de richesse hétérogène entre les différents cylindres.

Pour des moteurs Diesel, il est possible d'induire un vannage à l'admission ou d'effectuer des injections tardives de carburant.

Aussi, pour des moteurs à essence ou Diesel, l'augmentation de température peut reposer sur des stratégies :

- de débrayage et de passage au ralenti du moteur en phase de décélération du véhicule, stratégie dite « sailing idle » ;
- de coupure du moteur quand le véhicule s'arrête, stratégie dite « stop and start » ; ou encore,
- de coupure du moteur en phase de décélération du véhicule, stratégie dite « sailing stop ».

On connaît de la publication US2017/211493 un procédé de gestion thermique d'un système de post-traitement des gaz d'échappement.

Le procédé décrit comprend : la prédiction d'une valeur de température future d'un catalyseur, en fonction d'informations telles que les conditions de fonctionnement futures rencontrées par un véhicule, par exemple la vitesse future du véhicule et la pente future de la route ; la prédiction d'une valeur de profil de température, en fonction de la valeur future prédite et de valeurs de fonctionnement actuelles pour la température de sortie d'un catalyseur d'oxydation, d'un filtre à particules du système de post-traitement et de la température du lit d'un catalyseur de réduction des oxydes d'azote ; la détermination de la valeur actuelle de la température du catalyseur ; l'indication de la différence entre la valeur du profil de température et une température cible ; et, la détermination d'une demande de chaleur dans le but d'augmenter la température du catalyseur.

L'augmentation de la température est accomplie en contrôlant l'alimentation en carburant du moteur, en contrôlant le fonctionnement d'un turbocompresseur du moteur, ou encore en contrôlant le fonctionnement d'un refroidisseur de charge.

On connaît aussi de la publication EP2923050 un procédé de régulation de la température d'un système d'échappement d'un véhicule automobile.

La régulation de la température du système d'échappement repose sur l'activation et la désactivation d'un mode de fonctionnement en roue libre du véhicule, par déconnexion des roues motrices, sur la base de paramètres tels que la différence entre la température du système d'échappement et une température de référence, la vitesse du véhicule, ou encore l'inclinaison de la route.

Néanmoins, ces moyens de chauffe occasionnent tous une surconsommation de carburant et, par conséquent, une augmentation de l'émission de polluants.

Pour ces raisons, il est nécessaire d'optimiser le processus d'amorçage du dispositif de post-traitement des gaz d'échappement pour minimiser l'intervention des moyens de chauffe lors de son actionnement et réduire l'émission de polluants.

Il est donc proposé un procédé de gestion de l'amorçage d'au moins un dispositif de post-traitement des gaz d'échappement d'un moteur à combustion interne de véhicule automobile, comprenant la détermination du nombre minimal de moyens de chauffe dudit dispositif de post-traitement à actionner et de l'amplitude minimale de chauffe par lesdits moyens de chauffe pour la montée en température jusqu'à la température d'amorçage dudit dispositif de post-traitement, ladite détermination étant réalisée en fonction du profil de roulage associé à une ou plusieurs caractéristiques de fonctionnement du véhicule influençant le débit de chaleur généré par le moteur lors du roulage.

Le nombre minimal de moyens de chauffe dudit dispositif de post-traitement à actionner et l'amplitude minimale de chauffe par lesdits moyens de chauffe peuvent être en outre déterminés en fonction d'une vitesse de chauffe dudit dispositif de post-traitement souhaitée prédéfinie.

Selon l'invention, le procédé de gestion comprend les étapes successives suivantes :

la détermination d'une température cible $T°_{cible}$ d'amorçage du dispositif de post-traitement des gaz d'échappement ;
l'établissement de courbes de référence représentant la contribution de chaleur massique totale provenant du moteur au cours d'un roulage, pour plusieurs profils de roulage chacun associé à une ou plusieurs caractéristiques de fonctionnement du véhicule, selon l'équation suivante :

$$\text{Contribution chaleur massique totale} = \frac{C_p}{t} * \int_0^t \text{Qéch}_m * \left(T^{\circ}_{\text{entrée(t)}} - T^{\circ}_{\text{cible}}\right) dt$$

où $C_p$ est la capacité calorifique des gaz d'échappement ; $\text{Qéch}_m$ est le débit massique des gaz d'échappement ; $t$ est le temps de roulage total considéré ; $T°_{\text{entrée(t)}}$ est la température à l'entrée du dispositif de post-traitement ; et $T°_{cible}$ est la température cible d'amorçage du dispositif de post-traitement des gaz d'échappement identifiée ;
la détermination, pour chacun des profils de roulage associé à une courbe de référence, du nombre minimal de moyens de chauffe à actionner et de l'amplitude minimale desdits moyens de chauffe pour atteindre la température cible $T°_{cible}$ d'amorçage du dispositif de post-traitement des gaz d'échapppement ;
la détermination de la température interne $T°_{interne}$ du dispositif de post-traitement des gaz d'échappement et, lorsque la température interne $T°_{interne}$ déterminée est inférieure à la température cible $T°_{cible}$ d'amorçage, l'établissement d'une courbe de la situation courante déterminant la contribution de chaleur massique totale ; et
la détermination et le réglage du nombre minimal de moyens de chauffe et de l'amplitude minimale de chauffe desdits moyens de chauffe, en fonction de la comparaison de la courbe de contribution massique totale établie par rapport aux courbes de références.

De préférence, en parallèle de l'établissement des courbes de référence et de l'établissement la courbe de la situation courante déterminant la contribution de chaleur massique totale, le procédé de gestion comprend l'établissement de courbes de référence et l'établissement d'une courbe de la situation courante déterminant la contribution de chaleur massique glissante, selon l'équation suivante :

$$\text{Contribution chaleur massique glissante} = \frac{C_p}{T_2 - T_1} * \int_0^t \text{Qéch}_m * \left(T^{\circ}_{\text{entrée(t)}} - T^{\circ}_{\text{cible}}\right) dt$$

où $T_2-T_1$ est un intervalle de temps sur le temps de roulage total considéré ;
pour la détermination et le réglage du nombre minimal de moyens de chauffe et de l'amplitude minimale de chauffe desdits moyens de chauffe, en fonction de la comparaison de la courbe de contribution massique glissante établie avec les courbes de références.

Avantageusement, le procédé de gestion peut comprendre la détermination du nombre minimal de moyens de chauffe à actionner et de l'ampleur minimale de chauffe pour la montée en température jusqu'à la température d'amorçage d'une pluralité de dispositif de post-traitement du véhicule automobile.

De préférence, la température cible $T°_{cible}$ d'amorçage du dispositif de post-traitement des gaz d'échappement est modifiée au cours du roulage.

De préférence, les caractéristiques de fonctionnement du véhicule d'un profil de roulage sont choisies parmi : le lieu de roulage tel que : route, autoroute, ville, péri-urbain, embouteillages ; le mode de conduite tel que : sportif, dynamique, économique ; le chargement du véhicule tel que : le nombre de passagers et de bagages, la présence d'une remorque ; la nature et le nombre d'accessoires en fonctionnement tels que : les dispositifs de chauffage, dégivrage, climatisation ; la dénivelée de la route telle que : montée ou descente ; ou encore des stratégies de fonctionnement du moteur telles que : le « sailing idle », le « stop and start », le « sailing stop ».

D'autres buts, avantages et caractéristiques ressortiront de la description qui va suivre, donnée à titre purement illustratif et faite en référence aux dessins annexés sur lequel :

[Fig 1] illustre un groupe motopropulseur pour véhicule automobile comprenant un dispositif de post-traitement des gaz d'échappement.

[Fig 2] est un logigramme illustrant un mode de réalisation d'un procédé de gestion de l'amorçage d'un dispositif de post-traitement des gaz d'échappement, conforme à l'invention.

[Fig 3] est un logigramme illustrant un mode de réalisation d'un procédé de gestion de l'amorçage d'un dispositif de post-traitement des gaz d'échappement, conforme à l'invention.

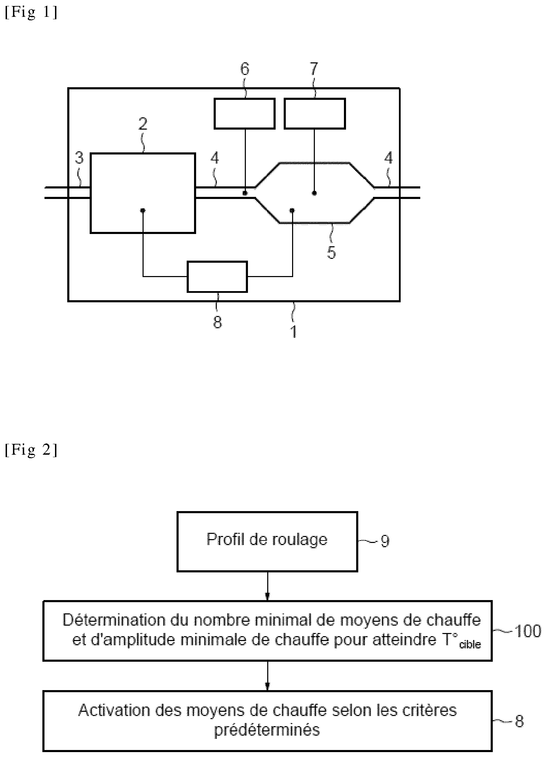

La figure 1 illustre un groupe motopropulseur 1 pour véhicule automobile comprenant un moteur à combustion interne 2.

Un circuit d'admission 3 permet l'admission d'air dans les cylindres du moteur 1 et un circuit d'échappement 4 permet l'échappement des gaz produits après combustion.

Un dispositif de post-traitement des gaz d'échappement 5, dit « dispositif de post-traitement » ci-après, est disposé en aval du moteur à combustion interne 2, sur le circuit d'échappement 4. Par exemple, le dispositif de post-traitement 5 peut comprendre un catalyseur trois voies, un catalyseur d'oxydation, un catalyseur de réduction sélective des oxydes d'azote ou encore un piège à oxydes d'azote.

En outre, le groupe motopropulseur 1 comprend des moyens 6 de détermination d'une température d'entrée $T°_{entrée(t)}$ correspondant à la température des gaz d'échappement à l'entrée du dispositif de post-traitement 5. Par exemple, la température d'entrée $T°_{entrée(t)}$ peut être déterminée par l'intermédiaire d'un capteur de température placé en amont du dispositif de post-traitement 5 ou d'un modèle de température.

Des moyens 7 permettent également la détermination d'une température interne $T°_{interne}$ correspondant à la température interne du dispositif de post-traitement 5. Par exemple, la température interne $T°_{interne}$ peut être déterminée via des modèles de température ou l'établissement d'une moyenne pondérée de température entre des capteurs situés à l'entrée et à la sortie du dispositif de post-traitement 5.

De plus, le groupe motopropulseur 1 comprend des moyens de chauffe 8 destinés à l'augmentation de la température du dispositif de post-traitement 5.

Par ailleurs, la figure 2 illustre un procédé de gestion de l'amorçage du dispositif de post-traitement 5 des gaz d'échappement émis par un moteur à combustion interne, tel que le moteur 2, conforme à l'invention.

Lors du roulage du véhicule automobile, une ou plusieurs caractéristiques de fonctionnement du véhicule, définissant un profil de roulage, peuvent influencer le débit de chaleur généré par le moteur. Selon leur nature, ces caractéristiques peuvent engendrer des phases pénalisantes ou des phases contributrices pour la montée en température du dispositif de post-traitement 5.

Les caractéristiques de fonctionnement du véhicule d'un profil de roulage qui peuvent être avantageusement considérées peuvent être choisies parmi : le lieu de roulage tel que route, autoroute, ville, péri-urbain, embouteillages ; le mode de conduite tel que sportif, dynamique, économique ; le chargement du véhicule tel que le nombre de passagers et de bagages, la présence d'une remorque ; la nature et le nombre d'accessoires en fonctionnement tels que les dispositifs de chauffage, dégivrage, climatisation ; la dénivelée de la route telle que montée ou descente ; ou encore des stratégies de fonctionnement du moteur telles que le « sailing idle », le « stop and start », le « sailing stop ».

En effet, la puissance demandée au moteur est d'autant plus importante que le profil de roulage est chargé, que la conduite est dynamique, que la dénivelée positive est importante, que les accessoires électriques sont utilisés, etc. Or, plus la puissance est importante, plus la température et le débit des gaz d'échappement sont élevés, et plus le dispositif de post-traitement 5 monte rapidement en température de sorte qu'il sera moins nécessaire d'actionner des moyens de chauffe.

Lors d'un roulage, le profil de roulage 9 du véhicule est déterminé.

Le procédé de gestion comprend alors la détermination, en fonction du profil de roulage 9 déterminé, du nombre minimal de moyens de chauffe 8 à actionner ainsi que l'amplitude minimale de chauffe nécessaire de ces moyens de chauffe 8 en vue de la montée en température du dispositif de post-traitement 5 jusqu'à sa température d'amorçage.

De préférence, le nombre minimal et l'amplitude minimale sont déterminés en fonction d'une vitesse de chauffe du dispositif de post-traitement 5 souhaitée préalablement définie. Avantageusement, la vitesse de chauffe sera choisie de sorte que le temps de chauffe jusqu'à la température d'amorçage soit suffisamment court pour que le taux de polluants générés par le moteur soit raisonnable, c'est-à-dire selon un taux prédéfini considéré comme acceptable.

Le nombre de moyens de chauffe 8 et l'amplitude de chauffe de ces moyens de chauffe 8 peuvent ainsi être ajustés en fonction de la sévérité du profil de roulage afin d'être minimaux pour réduire au maximum la consommation de carburant et donc l'émission de polluants.

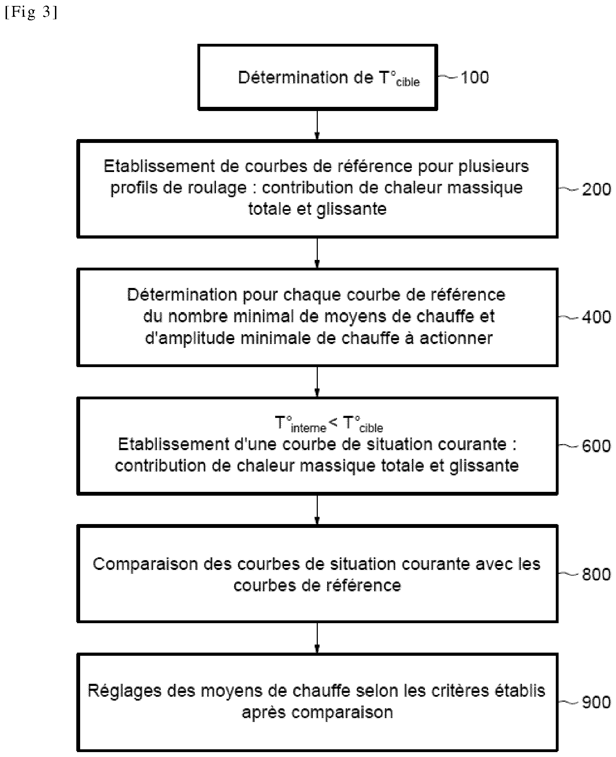

La figure 3 illustre un mode de réalisation du procédé de gestion de l'amorçage du dispositif de post-traitement 5 des gaz d'échappement selon l'invention.

De préférence, le procédé de gestion comprend une première étape 100 de détermination d'une température cible T°$_{cible}$ d'amorçage du dispositif de post-traitement 5 des gaz d'échappement. Il s'agit de la température interne visée du dispositif de post-traitement 5. La température cible T°$_{cible}$ est par exemple 200°C.

La température cible T°$_{cible}$ d'amorçage est choisie de façon à correspondre à la température minimale du dispositif de post-traitement 5 à partir de laquelle le dispositif de post-traitement 5 est apte à traiter les gaz d'échappement selon des critères d'efficacité prédéfinis. Selon un exemple de critères d'efficacité prédéfinis, il est par exemple possible de déterminer la température cible T°$_{cible}$ d'amorçage à partir de laquelle l'efficacité du dispositif de post-traitement 5 est sensiblement égale à 100%. Selon un autre exemple, il est possible de déterminer la température cible T°$_{cible}$ d'amorçage à partir de laquelle l'efficacité de dispositif de post-traitement 5 est inférieure à 100% mais néanmoins jugés suffisante, par exemple 80%.

L'étape de détermination 100 d'une température cible T°$_{cible}$ est avantageusement suivie d'une étape 200 d'établissement de courbes de référence représentant la contribution de chaleur massique totale provenant du moteur 2 selon plusieurs profils de roulage de référence. Les profils de roulage de référence sont chacun associé à une ou plusieurs caractéristiques de fonctionnement du véhicule.

La contribution de chaleur massique totale est définie selon l'équation suivante :

$$\text{Contribution chaleur massique totale} = \frac{C_p}{t} * \int_0^t \text{Qéch}_m * \left(T^°_{\text{entrée}(t)} - T^°_{\text{cible}}\right) dt$$

où C$_p$ est la capacité calorifique des gaz d'échappement ;
Qéch$_m$ est le débit massique des gaz d'échappement ;
t est le temps de roulage total considéré ;
T°$_{\text{entrée}(t)}$ est la température à l'entrée du dispositif de post-traitement ; et
T°$_{cible}$ est la température cible d'amorçage du dispositif de post-traitement des gaz d'échappement identifiée.

La contribution de chaleur massique totale permet de caractériser la sévérité du profil de roulage pour la montée en température du dispositif de post-traitement 5.

De préférence, en parallèle de l'étape 200 d'établissement des courbes de référence de contribution de chaleur massique totale, le procédé comprend en outre une étape 300 d'établissement de courbes de référence de contribution de chaleur massique glissante selon l'équation suivante :

$$\text{Contribution chaleur massique glissante} = \frac{C_p}{T_2 - T_1} * \int_0^t \text{Qéch}_m * \left(T^°_{\text{entrée}(t)} - T^°_{\text{cible}}\right) dt$$

où T$_2$-T$_1$ est un intervalle de temps sur le temps de roulage total considéré.

L'analyse de la contribution de chaleur massique selon des intervalles de temps au cours du roulage, et donc de temps plus courts que pour l'analyse de la contribution de chaleur massique totale, permet de caractériser l'évolution de la sévérité du profil de roulage au cours du roulage, et apprécier les modifications de la sévérité, qui peuvent se produire par exemple, lorsque le véhicule traverse une zone de bouchons, entame une descente de col, etc.. Selon un exemple, cet intervalle de temps peut être choisi égal à 30 secondes.

La contribution de chaleur massique glissante permet de caractériser la sévérité du profil de roulage pour le maintien de la température du dispositif de post-traitement 5 à la température cible T°$_{cible}$ d'amorçage.

Les courbes de contribution de chaleur massique totale et glissante traduisent l'apport de chaleur gratuit, naturel, hors moyens de chauffe supplémentaires 8, vers le dispositif de post-traitement 5.

Pour chacun des profils de roulage pour lequel une courbe de référence déterminant la contribution de chaleur massique totale et, de préférence, une courbe de référence déterminant la contribution de chaleur massique glissante, ont été établies, le procédé peut comprendre une étape 400 de détermination des moyens de chauffe 8 minimaux à mettre en oeuvre pour atteindre la température cible d'amorçage.

En particulier, sont déterminés le nombre minimal de moyens de chauffe 8 à actionner et l'amplitude minimale de ces moyens de chauffe 8 pour atteindre la température cible T°$_{cible}$ d'amorçage du dispositif de post-traitement 5.

Par nombre minimal et amplitude minimale, on entend le nombre de moyens de chauffe 8 et l'amplitude de ces moyens de chauffe 8 nécessaire pour atteindre la température cible T°_{cible} d'amorçage du dispositif de post-traitement 5, dans un temps prédéfini.

Ce nombre minimal de moyens de chauffe 8 actionné et cette amplitude minimale permettront d'atteindre la température cible T°_{cible} d'amorçage de manière juste suffisante en minimisant la consommation de carburant et donc l'émission de polluants.

Au cours du roulage, la température interne T°_{interne} du dispositif de post-traitement 5 est déterminée, selon une étape 500, grâce aux moyens 7 de détermination de la température interne T°_{interne}. La température interne T°_{interne} peut être déterminée en continu tout le long du roulage, ou avantageusement dans les phases de démarrage du moteur.

Lorsque la température interne T°_{interne} déterminée est inférieure à la température cible T°_{cible} d'amorçage, traduisant l'inefficacité du dispositif de post-traitement 5 et la nécessité de l'actionnement des moyens de chauffe 8, alors, lors de l'étape 600 suivante, on élabore une courbe de la situation courante déterminant la contribution de chaleur massique totale et, de préférence, l'établissement 700 d'une courbe de la situation courante déterminant la contribution de chaleur massique glissante.

La courbe déterminant la contribution de chaleur massique totale et la courbe de la situation courante déterminant la contribution de chaleur massique glissante obtenues relatives à la situation courante, c'est-à-dire du roulage en cours considéré et donc du profil de roulage en cours, sont comparées dans une étape 800 aux courbes de référence préétablies aux étapes 200 et 300.

A partir de cette comparaison, il est possible de déterminer si l'actionnement de moyens de chauffe 8 est nécessaire ou non. Le procédé peut alors comprendre la détermination 900 du nombre minimal des moyens de chauffe 8 et de l'amplitude minimale de chauffe desdits moyens de chauffe 8, ainsi que le réglage de ces moyens de chauffe 8 pour leur actionnement selon les critères ainsi déterminés.

Selon un mode de réalisation dans lequel le groupe motopropulseur comprend une pluralité de dispositif de post-traitement 5 des gaz d'échappement, le procédé pourra comprendre une étape de gestion de l'amorçage des différents dispositifs de post-traitement 5. Par exemple, il est possible de déterminer une température cible T°_{cible} d'amorçage pour chacun des dispositifs de post-traitement 5 et de déterminer le nombre minimal de moyens de chauffe à actionner ainsi que l'amplitude minimale du chauffage pour la montée en température jusqu'à la température d'amorçage de chacun des dispositifs de post-traitement 5.

Par pluralité de dispositif de post-traitement 5, on entend par exemple un système de post-traitement comprenant des dispositifs de post traitement de nature différente, visant chacun à la réduction d'émission de polluants de nature spécifique.

On pourra également prévoir que la température cible T°_{cible} d'amorçage du dispositif de post-traitement 5 des gaz d'échappement soit modifiée au cours du roulage. Par exemple, la température cible T°_{cible} visée peut être adaptée au cours du roulage, selon la sévérité du profil de roulage à un instant précis, afin d'atteindre dans certains cas une efficacité optimale ou, dans d'autres cas, une efficacité inférieure du dispositif de post-traitement 5. De même qu'il sera possible de moduler le réglage des moyens de chauffes selon la vitesse de chauffe à atteindre.

**Revendications**

1. Procédé de gestion de l'amorçage d'au moins un dispositif de post-traitement (5) des gaz d'échappement d'un moteur à combustion interne (2) de véhicule automobile, comprenant la détermination (100) du nombre minimal de moyens de chauffe (8) dudit dispositif de post-traitement (5) à actionner et de l'amplitude minimale de chauffe par lesdits moyens de chauffe (8) pour la montée en température jusqu'à la température d'amorçage dudit dispositif de post-traitement (5), la dite détermination (100) étant réalisée en fonction du profil de roulage (9) associé à une ou plusieurs caractéristiques de fonctionnement du véhicule influençant le débit de chaleur généré par le moteur (2) lors du roulage, ledit procédé comprenant en outre la détermination (100) d'une température cible (T°_{cible}) d'amorçage du dispositif de post-traitement des gaz d'échappement, **CARACTERISE EN CE QU'**il comporte les étapes successives suivantes :

   - l'établissement (200) de courbes de référence représentant la contribution de chaleur massique totale provenant du moteur au cours d'un roulage, pour plusieurs profils de roulage chacun associé à une ou plusieurs caractéristiques de fonctionnement du véhicule, selon l'équation suivante :

$$\text{Contribution chaleur massique totale} = \frac{C_p}{t} * \int_0^t \text{Qéch}_m * \left(T°_{entrée(t)} - T°_{cible}\right) dt$$

où $C_p$ est la capacité calorifique des gaz d'échappement ; $Qéch_m$ est le débit massique des gaz d'échappement ; t est le temps de roulage total considéré ; $T°_{entrée(t)}$ est la température à l'entrée du dispositif de post-traitement ; et $T°_{cible}$ est la température cible d'amorçage du dispositif de post-traitement des gaz d'échappement identifiée ;
- la détermination (400), pour chacun des profils de roulage associé à une courbe de référence, du nombre minimal de moyens de chauffe à actionner et de l'amplitude minimale desdits moyens de chauffe pour atteindre la température cible $T°_{cible}$ d'amorçage du dispositif de post-traitement des gaz d'échappement ;
- la détermination (500) de la température interne ($T°_{interne}$) du dispositif de post-traitement des gaz d'échappement et, lorsque la température interne ($T°_{interne}$) déterminée est inférieure à la température cible ($T°_{cible}$) d'amorçage, l'établissement (600) d'une courbe de la situation courante déterminant la contribution de chaleur massique totale ; et

la détermination (900) et le réglage du nombre minimal de moyens de chauffe et de l'amplitude minimale de chauffe desdits moyens de chauffe, en fonction de la comparaison (800) de la courbe de contribution massique totale établie par rapport aux courbes de référence.

2. Procédé de gestion selon la revendication 1, **caractérisé en ce que** le nombre minimal de moyens de chauffe dudit dispositif de post-traitement à actionner et l'amplitude minimale de chauffe par lesdits moyens de chauffe sont en outre déterminés en fonction d'une vitesse de chauffe dudit dispositif de post-traitement souhaitée prédéfinie.

3. Procédé de gestion selon l'une quelconque des revendications précédentes, **caractérisé en ce qu'**en parallèle de l'établissement (200) des courbes de référence et de l'établissement (600) la courbe de la situation courante déterminant la contribution de chaleur massique totale, le procédé de gestion comprend l'établissement (300) de courbes de référence et l'établissement (700) d'une courbe de la situation courante déterminant la contribution de chaleur massique glissante, selon l'équation suivante :

$$\text{Contribution chaleur massique glissante} = \frac{C_p}{T_2 - T_1} * \int_0^t Qéch_m * \left( T°_{entrée(t)} - T°_{cible} \right) dt$$

où $T_2$-$T_1$ est un intervalle de temps sur le temps de roulage total considéré,
pour la détermination (900) et le réglage du nombre minimal de moyens de chauffe et de l'amplitude minimale de chauffe desdits moyens de chauffe, en fonction de la comparaison (800) de la courbe de contribution massique glissante établie avec les courbes de référence.

4. Procédé de gestion selon l'une quelconque des revendications précédentes, **caractérisé en ce qu'**il comprend la détermination du nombre minimal de moyens de chauffe à actionner et de l'ampleur minimale de chauffe pour la montée en température jusqu'à la température d'amorçage d'une pluralité de dispositif de post-traitement du véhicule automobile.

5. Procédé de gestion selon l'une quelconque des revendications précédentes, **caractérisé en ce que** la température cible ($T°_{cible}$) d'amorçage du dispositif de post-traitement des gaz d'échappement est modifiée au cours du roulage.

6. Procédé de gestion selon l'une quelconque des revendications précédentes, **caractérisé en ce que** les caractéristiques de fonctionnement du véhicule d'un profil de roulage sont choisies parmi :
le lieu de roulage tel que : route, autoroute, ville, péri-urbain, embouteillages ; le mode de conduite tel que : sportif, dynamique, économique ; le chargement du véhicule tel que : le nombre de passagers et de bagages, la présence d'une remorque ; la nature et le nombre d'accessoires en fonctionnement tels que les dispositifs de chauffage, dégivrage, climatisation ; la dénivelée de la route telle que : montée ou descente ; ou encore des stratégies de fonctionnement du moteur telles que : le « sailing idle », le « stop and start », le « sailing stop ».

**Patentansprüche**

1. Verfahren zur Steuerung des Zündens mindestens einer Abgasnachbehandlungsvorrichtung (5) eines Verbrennungsmotors (2) eines Kraftfahrzeugs, umfassend das Bestimmen (100) der Mindestzahl von zu betätigenden Erwärmungsmitteln (8) der Nachbehandlungsvorrichtung (5) und der Mindesterwärmungsamplitude durch die Erwärmungsmittel (8) für den Temperaturanstieg bis auf die Zündtemperatur der Nachbehandlungsvorrichtung (5), wobei das Bestimmen (100) in Abhängigkeit von dem Fahrprofil (9) ausgeführt wird, das einem oder mehreren Betriebsmerkmalen des Fahrzeugs zugeordnet ist, die die vom Motor (2) beim Fahren erzeugte Wärmemenge beeinflussen, wobei das Verfahren ferner das Bestimmen (100) einer Ziel-Zündtemperatur ($T°_{Ziel}$) der Abgasnachbehandlungsvorrichtung umfasst, **DADURCH GEKENNZEICHNET, DASS** es die folgenden aufeinander folgenden Schritte umfasst:

- das Erstellen (200) von Referenzkurven, die den vom Motor bei einem Fahren kommenden Gesamtbeitrag massebezogener Wärme für mehrere Fahrprofile repräsentieren, von denen jedes einem oder mehreren Betriebsmerkmalen zugeordnet ist, nach der folgenden Gleichung:

$$Gesamtbeitrag\ massebezogener\ W\ddot{a}rme$$
$$= \frac{C_p}{t} * \int_0^t QAbgas_m * \left(T°_{Einlass(t)} - T°_{Ziel}\right)dt$$

worin $C_p$ die Wärmekapazität der Abgase ist; $QAbgas_m$ der Massenstrom der Abgase ist; $t$ die betrachtete Gesamtfahrzeit ist; $T°_{Einlass(t)}$ die Temperatur am Einlass der Nachbehandlungsvorrichtung ist; und $T°_{Ziel}$ die ermittelte Ziel-Zündtemperatur der Abgasnachbehandlungsvorrichtung ist;
- das Bestimmen (400), für jedes der einer Referenzkurve zugeordneten Fahrprofile, der Mindestzahl von zu betätigenden Erwärmungsmitteln und der Mindestamplitude der Erwärmungsmittel, um die Ziel-Zündtemperatur $T°_{Ziel}$ der Abgasnachbehandlungsvorrichtung zu erreichen;
- das Bestimmen (500) der Innentemperatur ($T°_{innen}$) der Abgasnachbehandlungsvorrichtung und, wenn die bestimmte Innentemperatur ($T°_{innen}$) geringer als die Ziel-Zündtemperatur ($T°_{Ziel}$) ist, das Erstellen (600) einer Kurve der aktuellen Situation, die den Gesamtbeitrag massebezogener Wärme bestimmt; und
- das Bestimmen (900) und Einstellen der Mindestzahl von Erwärmungsmitteln und der Mindesterwärmungsamplitude der Erwärmungsmittel in Abhängigkeit von dem Vergleich (800) der erstellten Kurve für den massebezogenen Gesamtbeitrag in Bezug auf die Referenzkurven.

2. Steuerungsverfahren nach Anspruch 1, **dadurch gekennzeichnet, dass** die Mindestzahl von zu betätigenden Erwärmungsmitteln der Nachbehandlungsvorrichtung und die Mindesterwärmungsamplitude durch die Erwärmungsmittel ferner in Abhängigkeit von einer vorgegebenen gewünschten Erwärmungsgeschwindigkeit der Nachbehandlungsvorrichtung bestimmt werden.

3. Steuerungsverfahren nach einem der vorhergehenden Ansprüche, **dadurch gekennzeichnet, dass** parallel zum Erstellen (200) der Referenzkurven und zum Erstellen (600) der Kurve der aktuellen Situation, die den Gesamtbeitrag massebezogener Wärme bestimmt, das Steuerungsverfahren das Erstellen (300) von Referenzkurven und das Erstellen (700) einer Kurve der aktuellen Situation, die den gleitenden Beitrag massebezogener Wärme bestimmt, nach der folgenden Gleichung umfasst:

$$Gleitender\ Beitrag\ massebezogener\ W\ddot{a}rme$$
$$= \frac{C_p}{T_2 - T_1} * \int_0^t QAbgas_m * \left(T°_{Einlass(t)} - T°_{Ziel}\right)dt$$

worin $T_2 - T_1$ ein Zeitintervall über die betrachtete Gesamtfahrzeit ist,
zum Bestimmen (900) und Einstellen der Mindestzahl von Erwärmungsmitteln und der Mindesterwärmungsamplitude der Erwärmungsmittel in Abhängigkeit von dem Vergleich (800) der erstellten Kurve für den gleitenden massebezogenen Beitrag mit den Referenzkurven.

4. Steuerungsverfahren nach einem der vorhergehenden Ansprüche, **dadurch gekennzeichnet, dass** es das Bestimmen der Mindestzahl von zu betätigenden Erwärmungsmitteln und des Mindesterwärmungsumfangs für den Temperaturanstieg bis auf die Zündtemperatur einer Mehrzahl von Nachbehandlungsvorrichtungen des Kraftfahrzeugs umfasst.

5. Steuerungsverfahren nach einem der vorhergehenden Ansprüche, **dadurch gekennzeichnet, dass** die Ziel-Zündtemperatur ($T°_{Ziel}$) der Abgasnachbehandlungsvorrichtung während des Fahrens geändert wird.

6.  Steuerungsverfahren nach einem der vorhergehenden Ansprüche, **dadurch gekennzeichnet, dass** die Betriebsmerkmale des Fahrzeugs eines Fahrprofils gewählt werden unter: dem Fahrort wie: Straße, Autobahn, Stadt, Stadtrand, Staus; dem Fahrmodus wie: sportlich, dynamisch, sparsam; der Beladung des Fahrzeugs wie: Anzahl von Insassen und Gepäckstücken, Vorhandensein eines Anhängers; der Art und der Anzahl von in Betrieb befindlichem Zubehör wie Heizungs-, Enteisungs-, Klimageräte; dem Höhenunterschied der Straße wie: Steigung oder Gefälle; oder aber den Betriebsstrategien des Motors wie:"Sailing Idle", "Stop and Start", "Sailing Stop".

## Claims

1.  Method for managing the priming of at least one exhaust gas post-processing device (5) of an internal combustion engine (2) of a motor vehicle, comprising the determination (100) of the minimum number of heating means (8) of said post-processing device (5) to be actuated and of the minimum amplitude of heating by said heating means (8) for the rise in temperature to the priming temperature of said post-processing device (5), said determination (100) being made as a function of the running profile (9) associated with one or more operating characteristics of the vehicle influencing the rate of heat generated by the engine (2) while running, said method further comprising the determination (100) of a target priming temperature ($T^{\circ}_{cible}$) of the exhaust gas post-processing device, **CHARACTERIZED IN THAT** it comprises the following successive steps:

    - the establishment (200) of reference curves representing the contribution of total mass heat from the engine while running, for several running profiles each associated with one or more operating characteristics of the vehicle, according to the following equation:

    $$\text{Total mass heat contribution} = \frac{C_p}{t} * \int_0^t Q\acute{e}ch_m * \left(T^{\circ}_{entr\acute{e}e(t)} - T^{\circ}_{cible}\right)dt$$

    in which $C_p$ is the heat capacity of the exhaust gases; $Q\acute{e}ch_m$ is the mass flow rate of the exhaust gases; t is the total running time considered; $T^{\circ}_{entr\acute{e}e(t)}$ is the temperature at the input of the post-processing device; and $T^{\circ}_{cible}$ is the target priming temperature of the exhaust gas post-processing device identified;
    - the determination (400), for each of the running profiles associated with a reference curve, of the minimum number of heating means to be actuated and of the minimum amplitude of said heating means to reach the target priming temperature $T^{\circ}_{cible}$ of the exhaust gas post-processing device;
    - the determination (500) of the internal temperature ($T^{\circ}_{interne}$) of the exhaust gas post-processing device and, when the internal temperature ($T^{\circ}_{interne}$) that is determined is lower than the target priming temperature ($T^{\circ}_{cible}$) , the establishment (600) of a curve of the current situation determining the total mass heat contribution; and
    - the determination (900) and the setting of the minimum number of heating means and of the minimum amplitude of heating of said heating means, as a function of the comparison (800) of the established total mass contribution curve with respect to the reference curves.

2.  Management method according to Claim 1, **characterized in that** the minimum number of heating means of said post-processing device to be actuated and the minimum amplitude of heating by said heating means are further determined as a function of a predefined desired rate of heating of said post-processing device.

3.  Management method according to either one of the preceding claims, **characterized in that**, in parallel with the establishment (200) of the reference curves and the establishment (600) of the curve of the current situation determining the total mass heat contribution, the management method comprises the establishment (300) of reference curves and the establishment (700) of a curve of the current situation determining the sliding mass heat contribution, according to the following equation:

    $$\text{Sliding mass heat contribution} = \frac{C_p}{T_2 - T_1} * \int_0^t Q\acute{e}ch_m * \left(T^{\circ}_{entr\acute{e}e(t)} - T^{\circ}_{cible}\right)dt$$

    in which $T_2$-$T_1$ is a time interval over the total running time considered,
    for the determination (900) and the setting of the minimum number of heating means and of the minimum amplitude of heating of said heating means, as a function of the comparison (800) of the established sliding mass contribution curve with the reference curves.

4. Management method according to any one of the preceding claims, **characterized in that** it comprises the determination of the minimum number of heating means to be actuated and of the minimum amplitude of heating for the rise in temperature to the priming temperature of a plurality of post-processing devices of the motor vehicle.

5. Management method according to any one of the preceding claims, **characterized in that** the target priming temperature ($T^{\circ}_{cible}$) of the exhaust gas post-processing device is modified while running.

6. Management method according to any one of the preceding claims, **characterized in that** the operating characteristics of the vehicle of a running profile are chosen from among:
   the running location such as: road, motorway, town, suburban, traffic jams; the driving mode such as: sporty, dynamic, economic; the loading of the vehicle such as: the number of passengers and the quantity of baggage, the presence of a trailer; the nature and the number of accessories in operation such as heating, de-icing, air-conditioning devices; the level of the road such as: climb or descent; or even engine operating strategies such as: "sailing idle", "stop and start", "sailing stop".

[Fig 1]

[Fig 2]

[Fig 3]

Détermination de T°$_{cible}$ ⌐100

Etablissement de courbes de référence pour plusieurs profils de roulage : contribution de chaleur massique totale et glissante ⌐200

Détermination pour chaque courbe de référence du nombre minimal de moyens de chauffe et d'amplitude minimale de chauffe à actionner ⌐400

T°$_{interne}$ < T°$_{cible}$
Etablissement d'une courbe de situation courante : contribution de chaleur massique totale et glissante ⌐600

Comparaison des courbes de situation courante avec les courbes de référence ⌐800

Réglages des moyens de chauffe selon les critères établis après comparaison ⌐900

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017211493 A

- EP 2923050 A